Europäisches Patentamt

European Patent Office

Office européen des brevets

(11) Veröffentlichungsnummer: **0 224 008**
**A2**

## (12) EUROPÄISCHE PATENTANMELDUNG

(21) Anmeldenummer: 86114313.9

(22) Anmeldetag: 16.10.86

(51) Int. Cl.⁴: **H 02 G 3/04**

(30) Priorität: 31.10.85 DE 3538844

(43) Veröffentlichungstag der Anmeldung:
03.06.87 Patentblatt 87/23

(84) Benannte Vertragsstaaten:
AT BE CH DE ES FR GB IT LI LU NL SE

(71) Anmelder: PCT PYROCHEMTEK AG
Rütlistrasse 50
CH-4051 Basel(CH)

(71) Anmelder: Mühl, Christian Dipl.-Ing.
Nördl. Münchner Strasse 15B
D-8022 Grünwald(DE)

(71) Anmelder: Chemische Fabrik Grünau GmbH
Robert-Hansen-Strasse 1
D-7918 Illertissen(DE)

(72) Erfinder: Eiermann, Horst W.
in Firma PCT Pyrochemtek AG Rütlistrasse 50
CH-4051 Basel(CH)

(72) Erfinder: Mühl, Christian, Dipl.-Ing.
Nördl. Münchner Strasse 15B
D-8022 Grünwald(DE)

(74) Vertreter: Patentanwälte Ruff und Beier
Neckarstrasse 50
D-7000 Stuttgart 1(DE)

(54) Bausatz zur Herstellung von brandhemmenden Kabelkanälen.

(57) Dieser Bausatz, der insbesondere zur brandhemmenden Verlegung von Kabeln und Leitungen bestimmt ist, weist stirnseitig verbindbare, selbsttragende Bauteile aus wärmeisolierendem Material und diesen zugeordnete, sich im wesentlichen längserstreckende Metallverstärkungen auf. Die selbsttragenden Bauteile sind Kanalabschnitte (4 bis 12), die jeweils aus einem außen durch längsseitig durchgehende Blechteile (16) verstärkten Rinnenabschnitt (4' bis 12') aus wärmeisolierendem Material mit einem im wesentlichen U-förmigen Querschnitt und einem diesem zugeordneten Deckel (4" bis 12") aus ebenfalls wärmeisolierendem Material bestehen, wobei die Rinnenabschnitte (4' bis 12') jeweils zur deckellosen Verlegung des Kanals (1) ausgerüstet und mit benachbarten Rinnenabschnitten (4' bis 12') verbindbar und die zugehörigen Deckel (4" bis 12") lösbar befestigbar sind.

FIG.1

FIG.2

EP 0 224 008 A2

Anmelder:

1) PCT Pyrochemtek AG
   Rütlistraße 50

   CH-4051 Basel

2) Dipl.-Ing. Christian Mühl
   Nördl. Münchner Straße 15b

   8022 Grünwald

3) Chemische Fabrik Grünau GmbH
   Robert-Hansen-Straße 1

   7918 Illertissen

## Bausatz zur Herstellung
## von brandhemmenden Kabelkanälen

Die Erfindung betrifft einen Bausatz zur Herstellung von brandhemmenden Kabelkanälen für neu zu verlegende Kabel und Leitungen, mit stirnseitig verbindbaren, selbsttragenden Bauteilen aus wärmeisolierendem Material und diesen zugeordneten, sich im wesentlichen längserstreckenden Metallverstärkungen.

Aus Isolationsgründen weisen heute die meisten elektrischen Kabel und Leitungen einen Kunststoffmantel auf. Da es sich bei den zur Herstellung derartiger Kabelummantelungen verwendeten Kunststoffen in aller Regel aus

Kostengründen um hitzeempfindliche, leicht brennbare und im Brandfalle schadende Kunststoffe handelt, wurden bereits verschiedene Vorschläge gemacht, um Kabelbrände zu vermeiden.

So wurde beispielsweise vorgeschlagen, auf die Kabel und Leitungen eine selbstlöschende Brandschutzmasse, wie sie beispielsweise aus der DE-PS 20 39 969 bekannt ist, aufzutragen. Dieses Verfahren ist relativ aufwendig, insbesondere in den Fällen, in denen mehrere nebeneinander verlaufende Kabel und/oder Leitungen vor Brandgefahr zu schützen sind. Außerdem handelt es sich hierbei um eine Zusatzleistung, die auch nur eine relativ kurze Zeit den Funktionserhalt ermöglicht.

Es wurde bereits eine Feuerschutz-Ummantelung entwickelt (vgl. EP-OS 0 063 733), die aus starren Mineralwolle-Bauelementen besteht und wenigstens an der Außenseite eine Feuerschutzbeschichtung aufweist. Diese nachträgliche Feuerschutz-Ummantelung bietet einen hinreichenden Schutz vor Kabelbränden und dient zum Funktionserhalt. Ihre Herstellung ist jedoch aufgrund der vielfältigen vorzufindenden bestehenden Trassen relativ aufwendig und setzt viele Bauteile und geschultes Personal voraus, dessen Tätigkeit mit der der Kabel- und Leitungsverleger, d.h. mit dem Elektroinstallateur zu koordinieren ist, was sich in der Praxis oft nicht oder nicht ohne weiteres realisieren läßt.

Der Erfindung liegt die Aufgabe zugrunde, ein zur Führung und Verteilung für neu zu verlegende Kabel und Leitungen in der Regel sowieso erforderliches Kabelträger- und Verteilungssystem zu schaffen, welches zusätzlich die brandhemmenden Eigenschaften aufweist und den Funk-

tionserhalt im Brandfall für eine bestimmte Zeit gewährleistet sowie gleichzeitig einfach und problemlos herstellbar ist.

Diese Aufgabe wird erfindungsgemäß durch einen Bausatz
der eingangs beschriebenen Art gelöst, der vorgefertigte, serienmäßige normierte, selbsttragende Kanalabschnitte aufweist, die jeweils aus einem außen durch
längsseitig durchgehende, vorzugsweise teilweise abgewinkelte Blechteile verstärkten Kanalabschnitt aus wärmeisolierendem Material mit einem im wesentlichen U-
förmigen Querschnitt und einem diesem zugeordneten
Deckel aus ebenfalls wärmeisolierendem Material bestehen, wobei die Rinnenabschnitte jeweils zur deckellosen
Verlegung des Kanals ausgerüstet und mit benachbarten
Rinnenabschnitten verbindbar und die zugehörigen Deckel
lösbar befestigbar sind.

Die aus der EP-OS 0 063 733 bekannte Feuerschutz-Ummantelung benötigt eine längsverlaufende Tragkonstruktion
bzw. ergibt erst nach der Kabel- und Leitungsverlegung,
der Auflage der Deckel und der danach erfolgenden Montage der sich längs erstreckenden Metallverstärkungen
einen in sich stabilen Kabelkanal. Dem gegenüber weist
der mit dem erfindungsgemäßen Bausatz herstellbare Kabelkanal einzelne, fertige Kanalabschnitte auf, die sich
schon vor der Kabelverlegung und dem Auflegen der zugehörigen Deckel stirnseitig zu einer in sich stabilen
Rinne verbinden lassen, in der dann die Kabel und Leitungen problemlos verlegt werden können. Von besonderem
Vorteil ist hierbei, daß zur Verlegung der einzelnen
vorgefertigten Kanalabschnitte und deren stirnseitiger
Verbindung kein geschultes Personal erforderlich ist, so daß diese Arbeiten von den Kabel- und Leitungsverlegern selbst durchgeführt werden können, ohne zur Führung noch weitere Bauteile verwenden zu müssen.

Die einzelnen geraden Kanalabschnitte weisen vorzugsweise jeweils eine Standardlänge von 80 - 120 cm, insbesondere 90 cm auf, wobei zu ihrer Unterstützung lediglich im Bereich ihrer Verbindungsstellen Querträger vorgesehen sind, wobei diese Querträger vorzugsweise Doppel-T-Träger sind. Diese Querträger können entweder einseitig an einer Wand o.dgl. befestigt sein oder beidseitig bzw. einseitig an vertikal verlaufenden Streben hängen, die ihrerseits an einer Raumdecke o.dgl. befestigt sind. Der erfindungsgemäße Kabelkanalbausatz eignet sich besonders zur Verlegung abgehängter Kanäle im Zwischendeckenbereich.

Die Deckel der Kanalabschnitte sind vorzugsweise im wesentlichen eben ausgebildet, was unter anderem den Vorteil bietet, daß sie während der oft mehrere Monate dauernden Kabel- und Leitungsverlegung raumsparend gestapelt und auch bei nur geringer lichter Höhe zwischen der vorverlegten Rinne und darüber befindlichen Installationen anderer Art aufgelegt werden können. Ein späteres Öffnen und wieder Verschließen - zum Nachinstallieren - des Kanals ist ebenfalls leicht möglich.

Die zur Verstärkung und Verbindung der einzelnen Kanalabschnitte vorgesehenen Blechteile, die vorzugsweise als Profilteile ausgebildet sind, erstrecken sich vorzugsweise nur über einen Teil des Kanalumfanges, insbesondere an den Außenwänden der Rinnenabschnitte, so daß bei ausreichender Stabilität das Eigengewicht der einzelnen Kanalabschnitte durch die Blechteile nicht unnötig erhöht wird. Vorteilhafterweise bestehen die Blechteile, vorzugsweise aus Edelstahl.

Die Blechteile der geraden Kanalabschnitte weisen vorzugsweise in bestimmten Abständen zueinander angeordnete Durchbrechungen zur seitlichen Herausführung von Kabeln und Leitungen aus dem Kanal und die Blechteile aller Kanalabschnitte in bestimmten Abständen zueinander angeordnete Durchbrechungen zum Einrasten von die jeweiligen Deckel übergreifenden Deckel-Befestigungsspangen auf. Für jeden Kanalabschnitt sind dabei vorzugsweise zwei seitliche Blechteile vorgesehen, die spiegelbildlich zueinander angeordnet sind. Die in den Blechteilen zur Kabel- und Leitungsherausführung vorgesehenen Durchbrechungen machen es möglich, daß die Kanalseitenwand problemlos zur Herausführung einzelner Kabel und Leitungen angebohrt werden kann, die hierdurch geschaffene Kanalöffnung am Rand jedoch rundum geschützt ist, so daß sie z.B. durch das Herausziehen einzelner Kabel oder Leitungen aus dem Kanal keine unnötige Erweiterung erfährt.

Die Blechteile verlaufen vorzugsweise entlang der oberen und unteren Längskanten der Rinnenabschnitte, wobei sie insbesondere den oberen Rand der Rinne mindestens teilweise umfassen, indem sie beispielsweise über diesen eingehängt sind, so daß sie den Kanalabschnitt nicht nur seitlich schützen, sondern zudem für den oberen Rand der Rinne einen sicheren Kantenschutz darstellen und verhindern, daß dieser Rand bei der Kabel- und Leitungsverlegung und bei sonstigen Installationsarbeiten beschädigt wird.

Die Blechteile können an den jeweiligen Rinnenabschnitt angeschraubt sein. Zur Vermeidung von Wärmebrücken durch in die Rinnen eindringende Befestigungselemente können zu ihrer Befestigung mit Vorteil jedoch auch den Kabelkanal untergreifende Spangen vorgesehen sein, mittels der die Blechteile vorzugsweise unter Vorspannung gegen die Kanalwände gehalten sind, wobei die Blechteile vorzugsweise jeweils von den Haltespangen hintergreifbare Längsrippen aufweisen können, die insbesondere fluchtend zur Unterseite des jeweiligen Rinnenabschnittes ausgerichtet sind. Die Haltespangen können dabei jeweils so breit ausgebildet sein, daß sie jeweils gleichzeitig die Längsrippen anschließender, benachbarter Blechteile gleichzeitig hintergreifen.

Die Anzahl der in einem Kanal befindlichen Kabel und Leitungen nimmt wegen der Herausführung von Kabeln und Leitungen mit der Entfernung von der zentralen Versorgungsstelle ab. Deshalb können Kanalabschnitte unterschiedlicher Breite und vorzugsweise gleicher Höhe und zu deren Verbindung Reduzierabschnitte vorgesehen sein, wobei diese vorzugsweise asymmetrisch ausgebildet sind, letzteres mit dem Vorteil, daß sie platzsparend montierbar sind.

Bei einer bevorzugten Ausführungsform schließen die Blechteile jeweils bündig mit der stirnseitigen Außenwand der Rinnenabschnitte ab, wobei zur Verbindung der Rinnenabschnitte Verbindungselemente vorgesehen sind. Diese Verbindungselemente bestehen vorzugsweise einerseits aus Umbördelungen der Blechteile und andererseits aus schraubenlosen Klemmspann-Verbindungsspangen, insbesondere Klemmspangen, mittels der Verbindungen von Rinnenabschnitten vorgenommen werden können, mit dem Vorteil, daß einerseits die Kanalabschnitte bzw. deren Rinnenabschnitte keine vorstehenden Teile aufweisen, die
beim Transport oder bei der Verlegung beschädigt werden
könnten und andererseits werkzeuglose Steckverbindungen
hergestellt werden können.

Zur Erhöhung ihrer brandhemmenden Wirkung sind die Rinnenabschnitte und vorzugsweise auch die ihnen zugeordneten Deckel so ausgebildet, daß sie stirnseitig einander
überlappend ineinander steckbar sind, wozu ihre Stirnseiten vorzugsweise einander entsprechend versetzt abgestuft ausgebildet sind. Dies kann durch mehrlagige Ausbildung leicht erreicht werden. Zwei Lagen können dabei
insbesondere zur stirnseitigen Abstufung um einen Betrag
versetzt zueinander angeordnet sein, der vorzugsweise 50
- 100 mm, insbesondere ca. 60 mm entspricht. Zur stirnseitigen Verbindung und Abdichtung benachbarter Kanalabschnitte kann mit Vorteil ein sich unter Hitzeeinwirkung
ausdehnender, hitzebeständiger Kitt vorgesehen sein.

Die einzelnen Kanalabschnitte, d.h. die einzelnen Rinnenabschnitte und vorzugsweise auch die diesen zugeordneten Deckel, sind vorzugsweise aus entsprechend profilierten Mineralwoll-Preßteilen gefertigt, die vorzugsweise mit einer Brandschutzmasse beschichtet sind, d.h.
die vorzugsweise einstückigen, rinnenförmigen Lagen der
Kanalabschnitte bestehen vorzugsweise aus einem Material, das durch Verpressen von Mineralwolle mit Kunstharz und Abbinden des Kunstharzes geformt und verfestigt
wurde. Dieses filzartige, jedoch spröde Material ist
sägbar und schneidbar und gestattet, wenn nötig, die
problemlose Verankerung von Schrauben und Befestigungsstiften.

Die oberen Ränder der einzelnen Rinnenabschnitte, deren
Profil vorzugsweise dem eines flachen U entspricht, weisen vorzugsweise eine Innenschulter zur Auflage des
ihnen zugeordneten Deckels auf, wobei der Deckel auf der
Unterseite vorzugsweise eine Wandhinterschneidung aufweist und der Deckelaußenrand auf der Oberkante der Kanalseitenwand auflegbar ist, so daß ein sicherer brandhemmender Deckelabschluß gewährleistet ist.

Der erfindungsgemäße Bausatz weist vorzugsweise für den
Aufbau eines Kabelkanales bestimmter Breite nur fünf
verschiedene Kanalabschnitte auf, nämlich gerade Verlängerungsabschnitte, nach oben führende Winkelabschnitte,
nach unten führende Winkelabschnitte, nach der Seite
führende Abschnitte und beliebig senkrecht ablängbare
gerade Abschnitte. Zu diesen Grund-Kanalabschnitten können gewünschtenfalls, d.h. je nach den Bedürfnissen auf
der Baustelle noch folgende Zusatz-Kanalabschnitte hinzukommen: gerade Abschnitte zur Bildung eines T- oder
Kreuzabzweiges, gerade Verjüngungsabschnitte, gerade
Verbreiterungsabschnitte und gerade Klemmkastenabschnitte, Lüftungsabschnitte und/oder Verteilerabschnitte.

Ist eine Kanalbelüftung erwünscht, so ist wenigstens
einer der vorgenannten geraden Abschnitte, vorzugsweise
ein gerader Verlängerungsabschnitt, mit einem Deckel
versehbar, der eine verschließbare Belüftungseinheit
aufweist.

Zur Bildung von ebenfalls brandgeschützten Klemmstellen
weist einer der vorgenannten Kanalabschnitte eine Bodenöffnung auf, durch die ein Klemmkastengehäuse aus brandhemmenden Materialien von oben eingeführt ist, dessen
Wandung vorzugsweise im Bodenbereich öffenbar ist, wobei das Klemmkastengehäuse vorzugsweise mit der ggf. vorhandenen Innenlage des Rinnenabschnittes einstückig ausgebildet ist.

Das Klemmkastengehäuse kann einen abnehmbaren Bodendeckel aufweisen. In seinem Inneren kann ein vorzugsweise von einem im Querschnitt trapezförmig profilierten Blech gebildeter Klemmkasten vorgesehen sein, in dem nach Abnahme des Bodendeckels zugängliche Klemmleisten befestigt sind.

Aus Stabilitätsgründen besteht das Klemmkastengehäuse vorzugsweise aus einem festeren Material als der es tragende Kanalabschnitt. Er ist deshalb vorzugsweise aus Silikat-Platten oder sonstigen nicht brennbaren und brandhemmenden Plattenmaterialien gefertigt. Es kann auch aus demselben harzgebundenen Plattenmaterial wie die Kanalabschnitte bestehen, jedoch nur dann, wenn diese höher verdichtet sind.

Die stirnseitigen Anschlußflächen der einzelnen Kanalabschnitte verlaufen, von einem gegebenenfalls vorgesehenen stufenförmigen Versatz abgesehen, vorzugsweise senkrecht zur angrenzenden Bodenfläche und vorzugsweise auch senkrecht zur angrenzenden Seitenfläche der Kanalabschnitte. Letzteres gilt auch für Zwischenstücke, die zur Verbindung einzelner Kanalabschnitte vorgesehen sein können, worauf in der nachfolgenden Beispielsbeschreibung noch gesondert hingewiesen werden wird.

Weitere Einzelheiten, Merkmale und Vorteile der Erfindung, die für sich allein oder zu mehreren in Kombination bei einer Ausführungsform der Erfindung verwirklicht sein können, ergeben sich aus den Ansprüchen und
der nachfolgenden Beschreibung bevorzugter Ausführungsformen der Erfindung im Zusammenhang mit der Zeichnung.

In der Zeichnung zeigen jeweils schematisch:

Fig. 1    eine Seitenansicht eines mit Hilfe eines
          erfindungsgemäßen Bausatzes aufgebauten
          Kabelkanales;

Fig. 2    eine Draufsicht auf den in Fig. 1 dargestellten Kabelkanal;

Fig. 3    eine Teilansicht auf zwei gerade Verlängerungsabschnitte ohne die zugehörigen
          Deckel;

Fig. 4    eine Teilansicht auf einen Winkelabschnitt
          und einen damit verbundenen geraden Verlängerungsabschnitt ohne die zugehörigen
          Deckel;

Fig. 5    zwei Deckelquerschnitte;

Fig. 6    eine quer geschnittene Teilansicht eines
          Kabelkanalabschnittes;

Fig. 7    eine Draufsicht auf einen Reduzierabschnitt;

Fig. 8    eine Seitenansicht eines Blechteiles;

Fig. 9    eine Bodenspange;

Fig. 10   eine Deckelspange; und

Fig. 11   eine Seitenansicht einer Klemmspange.

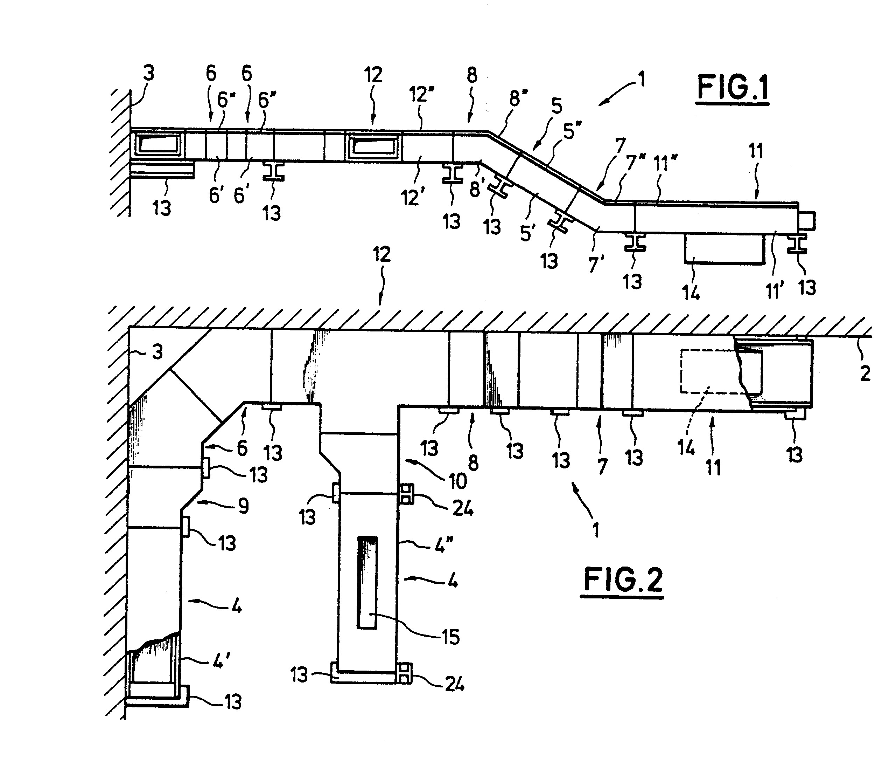

Der in den Fig. 1 und 2 dargestellte Kabelkanal 1 ist
entlang zweier rechtwinklig zueinander verlaufender Wände 2, 3 sowie an zwei Mittelabhängungen 24 verlegt und
aus mehreren stirnseitig ineinandergesteckten, vorgefertigten Kanalabschnitten zusammengesetzt, nämlich zwei
geraden Kanalabschnitten 4, einem geraden Abschnitt zur
Bildung eines T- oder Kreuzabzweiges 12, einem nach oben
führenden Winkelabschnitt 7, einem nach unten führenden
Winkelabschnitt 8, zwei nach der Seite führenden Winkelabschnitten 6, einem beliebig senkrecht ablängbaren geraden Abschnitt 5, einem geraden Verjüngungsabschnitt
10, einem geraden Verbreiterungsabschnitt 9, einem geraden Klemmkastenabschnitt 11 und einer in einem Deckel 4"
eingebauter Belüftungseinheit 15, die in ihrem Anschlußbereich jeweils auf einseitig eingespannten Querträgern
13 aufliegen.

Die einzelnen Kanalabschnitte 4 bis 12 bestehen jeweils
aus einem Rinnenabschnitt 4' bis 12', dessen Querschnitt
im wesentlichen dem eines flachen U entspricht und einem
darauf aufliegenden, im wesentlichen ebenen Deckel 4"
bis 12", wobei die Rinnenabschnitte 4' bis 12' jeweils
eine Innenschulter aufweisen, auf der die Deckelunterseite aufliegt.

In dem Klemmkastenabschnitt 11 ist das Klemmkastengehäuse 14 eingebaut.

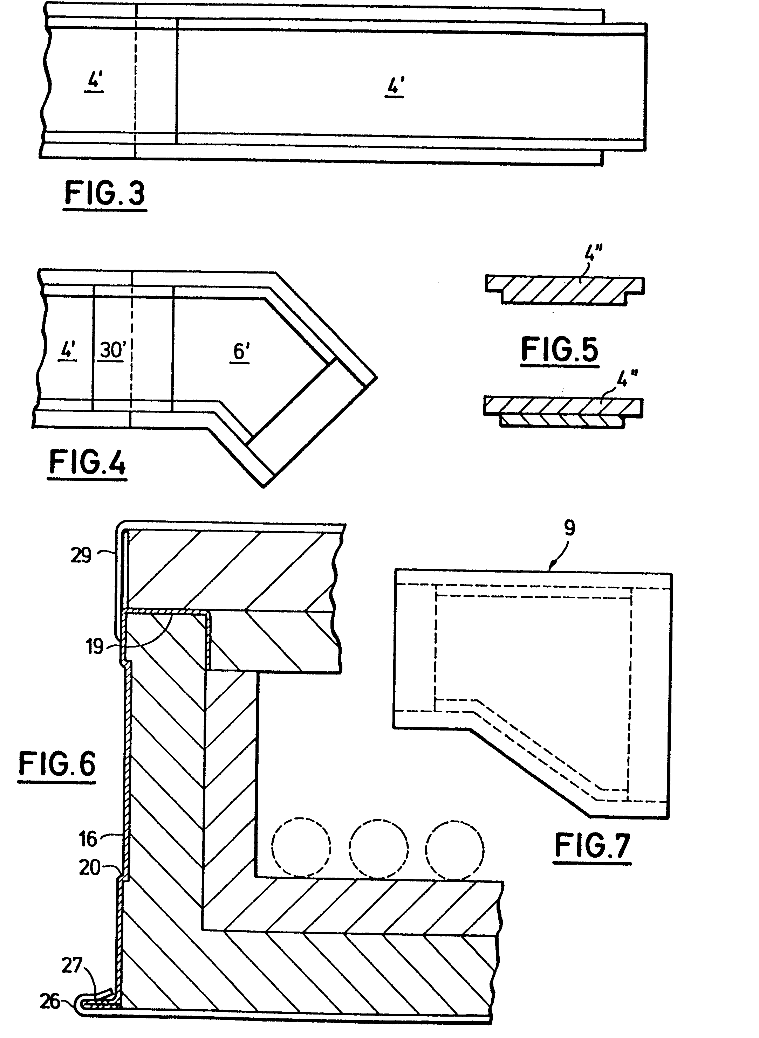

Der Deckel 4" des in der Zeichnungsmitte (Fig. 1 und 2)
verlaufenden Stichkanales ist bei sonst gleichem Kanalabschnitt 4 mit einer verschließbaren Belüftungseinheit
15 versehen, wie sie beispielweise aus der EP-OS 0 063
733 bekannt ist. Die Rinnenabschnitte 4' bis 12' sind
(vgl. Fig. 6) jeweils doppellagig ausgebildet, wobei die
innere Lage unter Bildung der vorerwähnten Innenschulter
niedriger als die äußere Lage ist.

Die Deckel 4" bis 12" können (vgl. Fig. 5 oben) einlagig
oder (vgl. Fig. 5 unten) doppellagig ausgebildet sein.

Die einzelnen, jeweils einen Rinnenabschnitt 4' bis 12'
und einen Deckel 4" bis 12" aufweisenden Kanalabschnitte
4 bis 12 weisen jeweils wenigstens ein positives und ein
negatives Ende auf, wobei die positiven Kanalabschnitt-
Enden jeweils so ausgebildet und bemessen sind, daß sie
in die negativen Kanalabschnitt-Enden mit geringem Spiel
eingeschoben werden können. Bei doppellagiger Ausbildung
der Kanalabschnitte 4 bis 12 bzw. der Rinnenabschnitte
4' bis 12' und der zugehörigen Deckel 4" bis 12" bedeutet dies, daß ihre beiden Lagen jeweils gleich lang
sind, jedoch unter Bildung stirnseitiger Abstufungen
gegeneinander versetzt angeordnet und miteinander verbunden, insbesondere verklebt sind.

Die einzelnen Rinnenabschnitte 4' bis 12' sind außen
längsseitig durch durchgehende profilierte Blechteile 16
verstärkt, die bei den Blechteilen der Rinnen 4, 11 und
12 in bestimmten Abständen zueinander angeordnete größere Durchbrechungen 17 und 18 zur seitlichen Herausfüh-

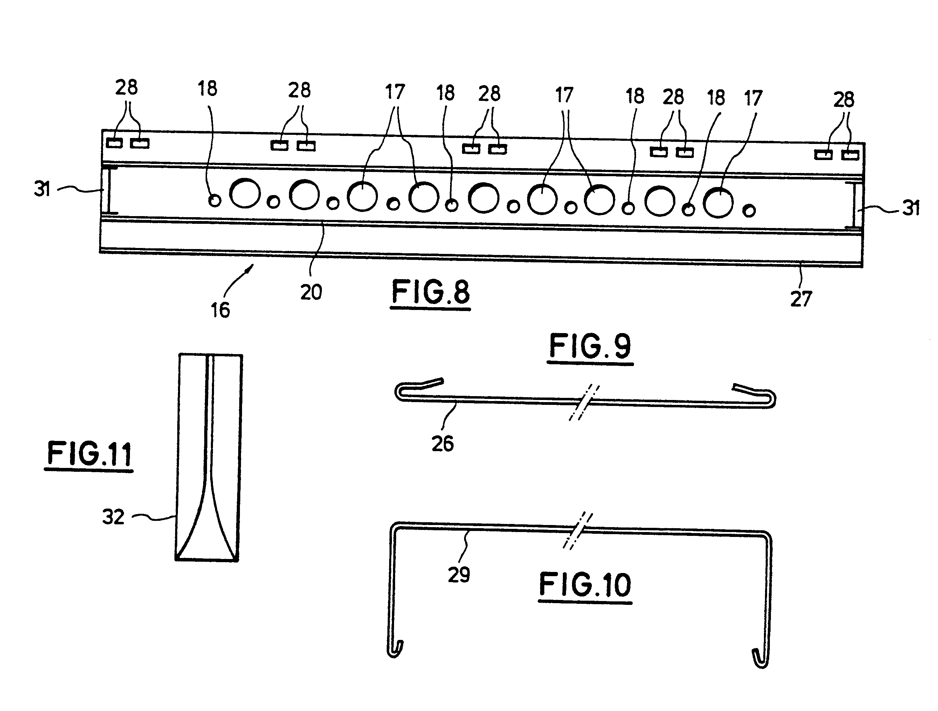

rung von Kabeln und Leitungen aus dem Kanalinneren aufweisen, wobei alle Blechteile in bestimmten Abständen zueinander angeordnete Durchbrechungen 28 zum Einrasten der den Deckel übergreifenden Deckel-Befestigungsspangen 29 aufweisen. Für jeden Kanalabschnitt sind zwei seitliche Blechteile 16, vorzugsweise aus Edelstahl vorgesehen, die spiegelbildlich zueinander angeordnet sind und den oberen Rand 19 mindestens teilweise umfassen (vgl. Fig. 6). Die Länge der beiden Blechteile 16 entspricht jeweils der des zugehörigen Kanalabschnittes, so daß die beiden Blechteile bündig mit der stirnseitigen Außenwand des jeweiligen Rinnenabschnittes abschließen. Zur Verbindung der Blechteile aller benachbarter Rinnenabschnitte, die vorzugsweise rechtwinklig ausgebildete Umbördelungen 31 aufweisen, sind Klemmspangen 32 (Fig. 11) vorgesehen, die von oben über die vorstehend aufgeführten Umbördelungen geschoben werden und zudem untere Spangen 26 (vgl. Fig. 9). Die Klemmspangen 32 sind Blechformteile und bestehen aus einem im wesentlichen rechteckigen Blechteil, dessen Längskanten zunächst nach oben und dann gegeneinander gebogen sind, wobei zwischen den gegeneinander gebogenen Längskanten ein schmaler Spalt besteht, der eine einseitig, in Fig. 11 nach unten weisende trichterförmige Erweiterung aufweist. Die den Kabelkanal untergreifenden Spangen 26 können auch der Fixierung dienen, wenn sie seitlich so verschoben werden, daß sie auf zwei benachbarte Kanalabschnitte in deren Übergangsbereich gleichzeitig einwirken. Zur Verbinung der ggf. abgelängten Blechteile der beliebig senkrecht ablängbaren geraden Kanalabschnitten 5 dienen aufschraubbare Laschen, die an einer Stirnseite den Umbördelungen 31 der Blechteile entsprechende Umbördelungen aufweisen.

Sämtliche seitlichen Blechteile 16 weisen eine parallel
zum Kanal 1 verlaufende Profilierung 20 zur Versteifung
und Vorspannung der unteren Spangen 26 auf.
Die seitlichen Blechteile, insbesondere die der geraden
Kanalabschnitte 4, können zur Bildung von T- oder Kreuzabschnitten vorgeprägte Abzweigöffnungen von vorzugsweise unterschiedlicher Breite aufweisen.

Zum Aufbau eines Kabelkanales aus Einzelteilen des erfindungsgemäßen Bausatzes kann vorzugsweise folgendermaßen vorgegangen werden:

Zunächst wird festgelegt, wie und in welcher Höhe der
fertige Kanal verlaufen soll. Ist dies geschehen, erfolgt zunächst die Montage der Querträger 13, die später
den fertigen Kanal tragen, wobei der Abstand dieser
Querträger 13 vorzugsweise jeweils so zu wählen ist, daß
die Verbindungsstellen der einzelnen Kanalabschnitte
jeweils im Bereich eines Querträgers liegen. Anschließend werden zunächst die vorgefertigten Rinnenabschnitte
4' bis 12', an denen die Blechteile 16 bereits montiert
sind und die bereits mit der Brandschutzbeschichtung
versehen sind, nach Abnahme der zugehörigen Deckel 4"
bis 12" verlegt und stirnseitig ineinandergeschoben. Ist
dies geschehen, so werden die Blechteile 16 der einzelnen Rinnenabschnitte untereinander über die hierzu vorgesehenen Umbördelungen 31 und Klemmspangen 32 miteinander verbunden, wodurch eine sich stabile Rinne gebildet
wird, in die jetzt problemlos die einzelnen Kabel verlegt werden können. Um sicherzustellen, daß die beidseitigen Blechteile 16 immer dicht an der Außenwand der
Rinnenabschnitte 4' bis 12' anliegen, hintergreifen Haltespangen 26 die Blechteile 16 an dort vorgesehenen Längsrippen 27, wobei letztere fluchtend zur Unterseite
der Rinnenabschnitte 4' bis 12' ausgerichtet sind. Nachdem zwei benachbarte Rinnenabschnitte 4' bis 12' beidseitig über jeweils eine Klemmspange 32 miteinander
verbunden sind, kann eine der vorzugsweise unter Vorspannung anliegenden Haltespangen 26 seitlich so weit
verschoben werden, daß sie den Übergang von einem
Blechteil 16 zum benachbarten Blechteil 16 bzw. zwischen
den jeweiligen Längsrippen 27 überdeckt, nachdem die Fugen zuvor mit Brandschutzkitt abgedichtet sind. Der offene Kanal kann in diesem Zustand ohne Gefahr der Beschädigung während der Kabelverlegung und -montage verbleiben.

Sind die Kabel verlegt, so kann der Kabelkanal durch
Auflegen und stirnseitiges Ineinanderschieben der Deckel
4" bis 12" geschlossen werden. Durch die Deckel 4" bis
12" übergreifende mit Ausnehmungen 28 im oberen Bereich
der seitlichen Blechteile 16 zusammenwirkende Haltespangen 29 (vgl. Fig. 10) kann sichergestellt werden, daß
die Deckel 4" bis 12" immer dicht auf ihren Rinnenabschnitten 4' bis 12' aufliegen.

Die einzelnen Kanalabschnitte 4 bis 12, d.h. sowohl deren Rinnenabschnitte 4' bis 12' wie deren Deckel 4" bis
12" weisen, wie bereits dargelegt, jeweils ein positives
und ein negatives Ende auf, wobei jeweils ein positives
Ende des einen Kanalabschnittes in das negative Ende des
benachbarten Kanalabschnittes einschiebbar ist. Für den
Fall, daß beim Kanalaufbau zwei miteinander zu verbindende Kanalabschnitte so angeordnet sind, daß sich ihre
negativen Enden (bzw. positiven Enden) gegenüberstehen,
weist der erfindungsgemäße Bausatz Zwischenstücke auf,
die einen Übergang zwischen den Innenlagen (bzw. Außenlagen) der benachbarten Kanalabschnitte bilden. Bei dem in Fig. 4 dargestellten Ausführungsbeispiel ist ein Zwischenstück 30 vorgesehen, das einen Übergang zwischen den Innenlagen der benachbarten Kanalabschnitte bildet.

Die Winkelstücke besitzen vorzugsweise Winkel von jeweils 120° bzw. 135°, so daß mit zwei bzw. drei Winkelstücken ein Winkel von 90° ohne zu scharfe Biegung der Kabel erreichbar ist. Es sind verschiedene breite Kanalabschnitte bei gleicher Bauhöhe von 16 cm vorgesehen. Die Außenbreite der Rinnenabschnitte (ohne Haltespangen 26 und Längsrippen 27) beträgt, je nach Kanalbreite, 18, 28, 38, 48, 58 bzw. 68 cm. Die lichte Innenbreite ist jeweils ca. 8 cm kleiner, da die Wandstärke der beiden Lagen der Rinnen jeweils ca. 2 cm beträgt. Der in Fig. 7 dargestellte Reduzierabschnitt 9 ist ebenfalls in verschiedener Breite aber gleicher Höhe vorgesehen und verbreitert bzw. verjüngt sich jeweils um eine Breitenstufe von 10 cm.

Anmelder:

1) PCT Pyrochemtek AG
Rütlistraße 50

CH-4051 Basel


2) Dipl.-Ing. Christian Mühl
Nördl. Münchner Straße 15b

8022 Grünwald


3) Chemische Fabrik Grünau GmbH
Robert-Hansen-Straße 1

7918 Illertissen

Bausatz zur Herstellung
von brandhemmenden Kabelkanälen


- - - - -


A N S P R Ü C H E


1. Bausatz zur Herstellung von brandhemmenden Kabalkanälen für neu zu verlegende Kabel und Leitungen, mit
stirnseitig verbindbaren, selbsttragenden Bauteilen
aus wärmeisolierendem Material und diesen zugeordneten, sich im wesentlichen längserstreckenden Metallverstärkungen, dadurch gekennzeichnet, daß er
vorgefertigte, selbsttragende Kanalabschnitte (4 bis 12) aufweist, die jeweils aus einem außen durch längsseitig durchgehende Blechteile (16) verstärkten Rinnenabschnitt (4' bis 12') aus wärmeisolierendem Material mit einem im wesentlichen U-förmigen Querschnitt und einem diesem zugeordneten Deckel (4" bis 12") aus wärmeisolierendem Material bestehen, wobei die Rinnenabschnitte (4' bis 12') jeweils zur deckellosen Verlegung des Kanals (1) ausgerüstet und mit benachbarten Rinnenabschnitten (4' bis 12') verbindbar und die zugehörigen Deckel (4" bis 12") lösbar befestigbar sind.

2. Bausatz nach Anspruch 1, dadurch gekennzeichnet, daß gerade Kanalabschnitte (4, 5, 11, 12) jeweils eine Standardlänge von 80 - 120 cm, insbesondere 90 cm, aufweisen und zu ihrer Stützung lediglich im Bereich ihrer Verbindungsstellen-Querträger (13) vorgesehen sind.

3. Bausatz nach einem der vorhergehenden Ansprüche, dadurch gekennzeichnet, daß die Deckel (4" bis 12") im wesentlichen eben sind.

4. Bausatz nach einem der vorhergehenden Ansprüche, dadurch gekennzeichnet, daß sich die vorzugsweise als Profilteile ausgebildeten Blechteile (16) nur über einen Teil des Kanalumfanges, insbesondere im wesentlichen an den seitlichen Außenwänden der Rinnenabschnitte (4' bis 12') erstrecken, wobei die Blechteile (16) der Kanalabschnitte (4, 11 und 12) insbesondere in Abständen zueinander angeordnete Durchbrechungen (17, 18) zur seitlichen Herausführung von Kabeln und Leitungen aus dem Kabelkanal (1) aufweisen, wobei für jeden Kanalabschnitt vorzugsweise zwei seitliche Blechteile (16) vorgesehen
sind, die spiegelbildlich zueinander angeordnet
sind.

5. Bausatz nach einem der vorhergehenden Ansprüche, dadurch gekennzeichnet, daß die Blechteile aller Kanalabschnitte (4 bis 12) in Abständen zueinander
   angeordnete Durchbrechungen (28) zum Einrasten von
   den die zugehörigen Deckel (4" bis 12") übergreifenden Deckel-Befestigungsspangen (29) aufweisen.

6. Bausatz nach einem der vorhergehenden Ansprüche, dadurch gekennzeichnet, daß die Blechteile (16) entlang der oberen und unteren Längskanten der Rinnenabschnitte (4' bis 12') verlaufen und insbesondere
   den oberen Rand der Rinne wenigstens teilweise umfassen.

7. Bausatz nach einem der vorhergehenden Ansprüche,
   dadurch gekennzeichnet, daß die Blechteile (16)
   durch den Kabelkanal (1) untergreifende Spangen vorzugsweise unter Vorspannung gegen die Kanalwände gehalten sind und die Blechteile (16) vorzugsweise jeweils von den Haltespangen (26) hintergreifbare
   Längsrippen (27) aufweisen, die insbesondere fluchtend zur Unterseite der Rinnenabschnitte (4' bis
   12') ausgerichtet sind.

8. Bausatz nach einem der vorhergehenden Ansprüche, dadurch gekennzeichnet, daß zur Verbindung von Kanalabschnitten unterschiedlicher Breite und vorzugsweise gleicher Höhe Verbreiterungs- und Verjüngungsabschnitte (9, 10) vorgesehen sind, die vorzugsweise
   asymmetrisch ausgebildet sind.

9. Bausatz nach einem der vorhergehenden Ansprüche, dadurch gekennzeichnet, daß die Blechteile (16) bündig mit den stirnseitigen Außenwänden der Rinnenabschnitte (4' bis 12') abschließen und zur Verbindung der Rinnenabschnitte (4' bis 12') Verbindungselemente (32) vorgesehen sind, vorzugsweise die Blechteile Umbördelungen (31) aufweisen, mittels derer und vorgesehener schraubenloser Klemmspann-Verbindungsspangen, insbesondere Klemmspangen (32), Verbindungen von Rinnenabschnitten (4' bis 12') herstellbar sind.

10. Bausatz nach einem der vorhergehenden Ansprüche, dadurch gekennzeichnet, daß die Rinnenabschnitte (4' bis 12') und vorzugsweise auch die ihnen zugeordneten Deckel (4" bis 12") stirnseitig einander überlappend ineinander steckbar und ihre Stirnseiten hierzu vorzugsweise einander entsprechend versetzt abgestuft ausgebildet sind.

11. Bausatz nach einem der vorhergehenden Ansprüche, dadurch gekennzeichnet, daß die Rinnenabschnitte (4' bis 12') und vorzugsweise auch ihre Deckel (4" bis 12") aus entsprechend profilierten Mineralwoll-Preßteilen bestehen, die vorzugsweise mit einer Brandschutzmasse beschichtet sind.

12. Bausatz nach einem der vorhergehenden Ansprüche, dadurch gekennzeichnet, daß die oberen Ränder (19) der Rinnenabschnitte (4' bis 12') eine abgestufte Innenschulter zur Auflage des ihnen zugeordneten Deckels (4" bis 12") aufweisen und die den Rinnenabschnitten (4' bis 12') zugeordneten Deckel (4" bis 12") auf der Unterseite vorzugsweise eine Wandungshinterschneidung aufweisen, die insbesondere dem Profil der oberen Ränder der Rinnenabschnitte angepaßt ist, wobei der Deckelaußenrand auf der Oberkante (19) der Kanalseitenwand aufliegt.

13. Bausatz nach einem der vorhergehenden Ansprüche, dadurch gekennzeichnet, daß die Rinnenabschnitte (4' bis 12') und/oder die ihnen zugeordneten Deckel (4" bis 12") mindestens doppellagig ausgebildet sind, wobei insbesondere die beiden Lagen der Rinnenabschnitte (4' bis 12') in Längsrichtung insbesondere zur stirnseitigen Abstufung um einen Betrag versetzt zueinander angeordnet sind, der vorzugsweise 50 - 100 mm, insbesondere ca. 60 mm, entspricht.

14. Bausatz nach einem der vorhergehenden Ansprüche, dadurch gekennzeichnet, daß er für einen Kabelkanal (1) bestimmter Breite fünf verschiedene Kanalabschnitte aufweist, nämlich gerade Verlängerungsabschnitte (4), nach oben führende Winkelabschnitte (7), nach unten führende Winkelabschnitte (8), nach der Seite führende Winkelabschnitte (6), beliebig senkrecht ablängbare gerade Abschnitte sowie ggf. gerade Abschnitte (12) zur Bildung eines T- oder Kreuzabzweiges, gerade Verjüngungsabschnitte (10), gerade Verbreiterungsabschnitte (9) und gerade Klemmkastenabschnitte (11), Lüftungsabschnitte und/oder Verteilerabschnitte, wobei vorzugsweise wenigstens ein Belüftungsabschnitt vorgesehen ist, insbesondere wenigstens ein vorzugsweise ein gerader Verlängerungsabschnitt (4) einen Deckel (4") aufweist, der eine verschließbare Belüftungseinheit (15) aufweist.

15. Bausatz nach einem der vorhergehenden Ansprüche, dadurch gekennzeichnet, daß ein Klemmkastenabschnitt (11) eine Bodenöffnung aufweist und im Bereich dieser Bodenöffnung mit einem Klemmkastengehäuse (14) aus brandhemmenden Materialien versehen ist, dessen Wandung vorzugsweise im Bodenbereich öffenbar ist, wobei vorzugsweise das Klemmkastengehäuse (14) und der Klemmkasten von oben her durch die Bodenöffnung des Klemmkastenabschnittes (11) jeweils einsetzbar und von diesem getragen ist, wobei das Klemmkastengehäuse (14) vorzugsweise mit der Innenlage des Rinnenabschnittes einstückig ausgebildet ist, insbesondere das Klemmkastengehäuse (14) aus einem festeren Material als der ihn tragende Kanalabschnitt besteht, und aus nicht brennbaren Plattenmaterialien, vorzugsweise aus Silikat-Platten, gefertigt ist.

16. Bausatz nach einem der vorhergehenden Ansprüche, dadurch gekennzeichnet, daß die stirnseitigen Anschlußflächen der Kanalabschnitte (4 bis 12) und etwaiger Zwischenstücke (30) von einem gegebenenfalls vorgesehenen stufenförmigen Versatz abgesehen, stets senkrecht zur angrenzenden Bodenfläche und vorzugsweise auch senkrecht zur angrenzenden Seitenfläche der Kanalabschnitte (4 bis 12) verlaufen.

- - - - - - -

FIG.1

FIG.2

1/3

0224008

FIG.3

FIG.4

FIG.5

FIG.6

FIG.7

**FIG.8**

**FIG.9**

**FIG.11**

**FIG.10**